# EUROPEAN PATENT APPLICATION

(11) **EP 3 005 976 A1**
(43) Date of publication of application: **13.04.2016**
(21) Application number: 15189009.2
(22) Date of filing: 08.10.2015
(51) Int. Cl.: A61C 13/01, A61C 13/00

(54) **PROCESS FOR THE FORMATION OF DENTAL PROSTHESES AND PROCESS FOR MAKING DENTAL WAFERS AND AND DENTAL WAFER FOR THE FORMATION OF DENTAL PROSTHESES**

(30) Priority: 10.10.2014 IT MI20141780
(71) Applicant: Micro.Medica S.R.L., 27030 Palestro (PV) (IT)
(72) Inventor: CIRRONIS, Giuseppe, 27030 PALESTRO (PV) (IT); PADERNO, Alessandra, 27030 PALESTRO (PV) (IT)
(74) Representative: Lotti, Giorgio

(57) **Abstract**

The invention concerns a process (100) for the formation of dental prostheses (1) and/or support structures for dental prostheses, such as bridges and/or similar, which comprises the steps of making (101) a dental wafer (1) and removing (102) a predefined quantity of material, according to a three-dimensional reference model, from such a dental wafer (1) to form a dental prosthesis (P) and/or a support structure for dental prostheses (P). The step of making the wafer comprises the steps of: overlapping (101a) two or more layers of formation (2a), pre-imbued or to be imbued with at least one thermosetting resin or a thermoplastic resin, wherein at least one of the layers of formation (2a) comprises graphene and/or carbon fibre and/or glass fibre; compressing (101b) one layer of formation (2a) against the other to join these latter and break any micro air bubbles present therein; heating (101c) the layers of formation (2a) to harden these latter and form the dental wafer (1) provided with graphene and finished the wafer (1) made. The invention also refers to a process for making dental wafers (1) and a dental wafer (1) that comprises graphene.

## Description

The present invention refers to a process for the formation of dental prostheses.

Another object of the present invention is a process for making wafers and/or similar structures, in particular for the formation of dental prostheses and/or of support structures for dental prostheses, such as bridges and/or similar.

Another object of the present invention is a dental wafer and/or a similar structure for the formation of dental prostheses, in particular on material removal CNC centres and/or machines.

The present invention is suitable for being used in the field of dentistry and/or orthodontics and, in particular, it refers to dental prostheses intended to partially and/or totally replace the natural dental arches of patients and/or to support structures of such prostheses, like for example bridges and/or similar.

In detail, the present invention refers to dental wafers and/or to dental tablets and/or to similar structures, called in the field by the technical term "pre-forms" or "high-density pre-forms", intended for apparatuses for the formation of dental prostheses that operate by removal of material, like for example pantographs or CNC CAD-CAM centres and/or machines. Generally, dental wafers are monolithic elements of substantially disc-shaped configuration from which it is possible to obtain, by removal of material, dental prostheses, bridges and/or circular, semi-circular and/or arched structures.

Among the various dental wafers that can be found on the market there are wafers made of zirconium, polymethyl methacrylate (Pmma) and modelling wax and similar.

However, it should be noted that it is not possible to obtain or form a high-performance dental prosthesis, in other words having high mechanical strength, hardness, solidity and lightness, from the aforementioned wafers. The Applicant has found that the wafers spread on the market are made through materials that cannot give them high performance in relation to mechanical strength, hardness, solidity and lightness.

The main purpose of the present invention is to solve the problems encountered in the prior art.

A purpose of the present invention is to provide dental prostheses and/or support structures for dental prostheses having high mechanical strength.

A further purpose of the present invention is to propose dental prostheses and/or support structures for dental prostheses having high hardness.

Another purpose of the present invention is to provide a dental prosthesis and/or support structures for dental prostheses that is particularly solid.

A further purpose of the present invention is to propose a dental prosthesis and/or support structures for dental prostheses that is rather light.

Another purpose of the present invention is to provide dental wafers and/or similar structures from which it is possible to obtain, by removal of material, dental prostheses and/or support structures for dental prostheses having high mechanical strength, hardness, solidity and lightness.

The purposes specified above, and others still, are substantially accomplished by a process for the formation of dental prostheses and/or support structures for dental prostheses, a process for making wafers and/or similar structures, in particular for the formation of dental prostheses and/or support structures for dental prostheses, such as bridges and/or similar, as well as a dental wafer and/or a similar structure for the formation of dental prostheses, in particular on material removal CNC centres and/or machines, as expressed and described in the following claims.

Now follows, as an example, the description of a preferred, but not exclusive embodiment of a process for the formation of dental prostheses and/or support structures for dental prostheses, of a process for making wafers and/or similar structures, in particular for the formation of dental prostheses and/or support structures for dental prostheses, such as bridges and/or similar, as well as of a dental wafer and/or a similar structure for the formation of dental prostheses, in particular on material removal CNC centres and/or machines, in accordance with the present invention.

The description will be made hereafter with reference to the attached drawings, provided only for indicating and therefore not limiting purposes, in which:
figure 1 is a perspective view of a dental wafer and/or a similar structure for the formation of dental prostheses, in particular on material removal CNC centres and/or machines, in accordance with the present invention;
figure 2 is a schematic representation of the layers of formation of the body of the dental wafer according to figure 1;
figure 3 is a schematic representation of a dental prosthesis obtained, by removal of material, from the dental wafer according to figures 1 and 2;
figure 4 is a schematic representation of a sheet provided with graphene, carbon or glass fibres arranged unidirectionally;
figure 5 is a schematic representation of a sheet provided with graphene, carbon or glass fibres arranged bidirectionally, in particular orthogonal to one another;
figure 6 is a schematic representation of a sheet provided with graphene, carbon or glass fibres arranged multidirectionally to one another;
figures 7 and 8 are a schematic representation of the overlapping of the layers of formation of the dental wafer according to figures 1 and 2;
figure 9 is a schematic representation of a process for the formation of dental prostheses and/or support structures for dental prostheses, in accordance with the present invention;
figure 10 is a representation of a mould that can be used in the process according to the block diagram of figure 9 for making the dental wafers according to figures 1 and 2.

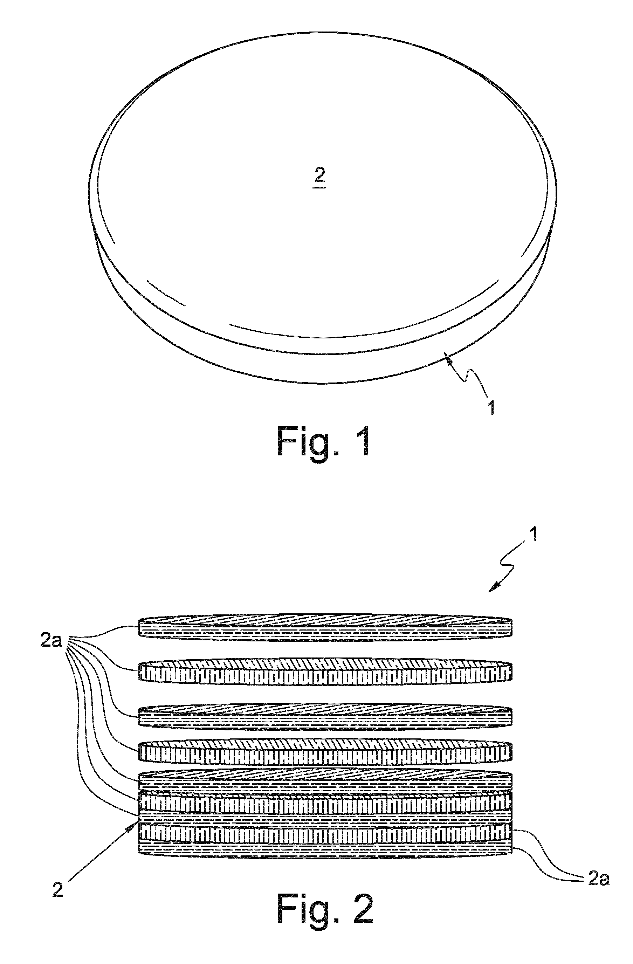

With reference to figures 1 and 2, reference numeral 1 wholly indicates a dental wafer and/or a similar structure for dental prostheses P, in particular on material removal CNC centres and/or machines, in accordance with the present invention.

The dental wafer 1 comprises a body 2 having a substantially cylindrical configuration, preferably disc-shaped (figure 1).

However, it should be noted that for the purposes of the present invention the body 2 of the dental wafer 1 can also have a cubic, parallelepiped or prismatic configuration.

Going into detail, the body 2 of the dental wafer 1 is provided with at least two layers of formation 2a (figure 2), in particular a plurality of layers of formation 2a, overlapping one another.

Advantageously, at least one of the layers of formation 2a of the body 2 of the dental wafer 1 comprises graphene and/or carbon fibre and/or glass fibre. Advantageously, at least one of the layers of formation 2a of the body 2 of the dental wafer 1 comprises graphene and/or sheeted graphene, the thickness of which is comprised between 0.2µ and 250µ, preferably between 0.5µ and 200µ and/or graphene fibre and/or graphene particles of various forms, with maximum dimensions comprised between 0.2µ and 300µ, preferably 0.5µ and 20µ and/or a resin doped with graphene particles of various forms, with maximum dimensions comprised between 0.2µ and 300µ, preferably 0.5µ and 20µ.

In accordance with a preferred embodiment of the present invention, each layer 2a of the body 2 of the dental wafer 1 comprises graphene and/or sheeted graphene and/or graphene fibre and/or graphene particles and/or a resin doped with graphene particles. In accordance with a further embodiment of the present invention, at least one of the layers of formation 2a of the body 2 of the dental wafer 1, preferably more than one, comprises carbon fibre, in particular in sheet, in which each fibre has a diameter comprised between 1µ and 15µ, preferably between 3µ and 8µ, and/or a resin doped with carbon fibres, in which each fibre has a diameter comprised between 1µ and 15µ, preferably between 3µ and 8µ, and/or particles of carbon fibre of various forms the maximum dimensions of which are comprised between 0.1mm and 12mm, preferably between 0.1mm and 6mm.

In accordance with a preferred embodiment of the present invention, each layer 2a of the body 2 of the dental wafer 1 comprises carbon fibre in sheet and/or in resin and/or particles of carbon fibre dispersed in a resin.

In accordance with a further embodiment of the present invention, at least one layer of formation 2a in carbon fibre, preferably more than one, of the body 2 of the dental wafer 1 comprises glass fibre, in which each fibre has a diameter comprised between 1µ and 15µ, preferably between 3µ and 8µ, in particular in sheet, and/or a resin doped with glass fibre, in which each fibre has a diameter comprised between 1µ and 15µ, preferably between 3µ and 8µ, and/or particles of glass fibre of various forms the maximum dimensions of which are comprised between 0.1mm and 12mm, preferably between 0.1mm and 6mm.

In accordance with a preferred embodiment of the present invention, each layer 2a of the body 2 of the dental wafer 1 comprises glass fibre in sheet and/or in resin and/or particles of carbon fibre dispersed in a resin.

Therefore, the dental wafer 1 described above can be made totally with graphene or carbon fibre or glass fibre, just as it can be made using such materials in combination. For example, it is possible to provide that the body 2 of the dental wafer 1 be formed from some layers of formation 2a in graphene and from some layers of formation 2a in carbon fibre.

Alternatively, it is possible to provide for the body 2 of the dental wafer 1 to be formed from some layers of formation 2a in graphene and from some layers of formation 2a in glass fibre.

It is also possible to provide for the body 2 of the dental wafer 1 to be provided with some layers of formation 2a in carbon fibre and others in glass fibre. It is not excluded that the body 2 of the dental wafer 1 also be provided with some layers of formation 2a in graphene, some layers of formation 2a in carbon fibre and other layers of formation 2a in glass fibre suitably coupled to each other.

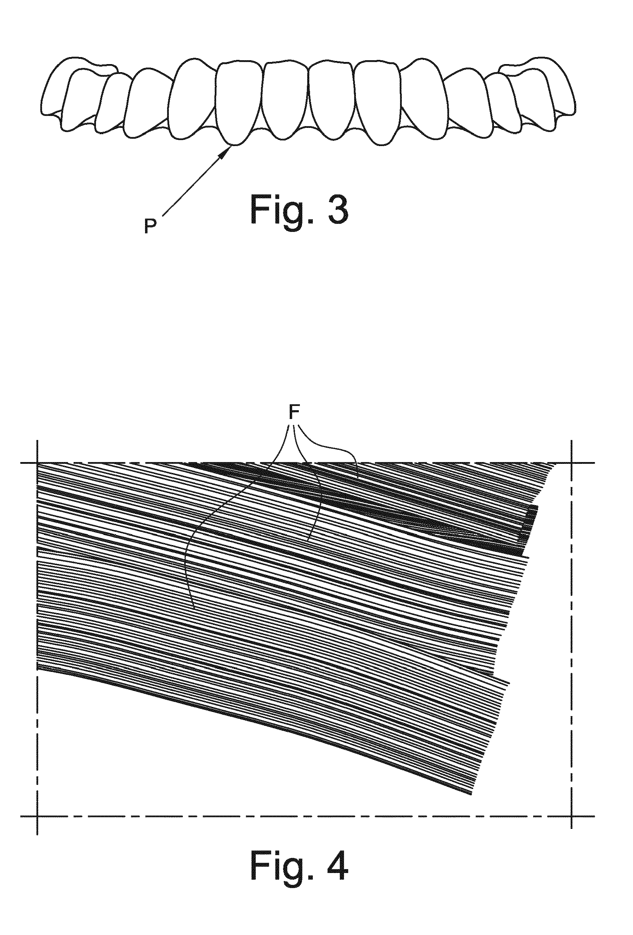

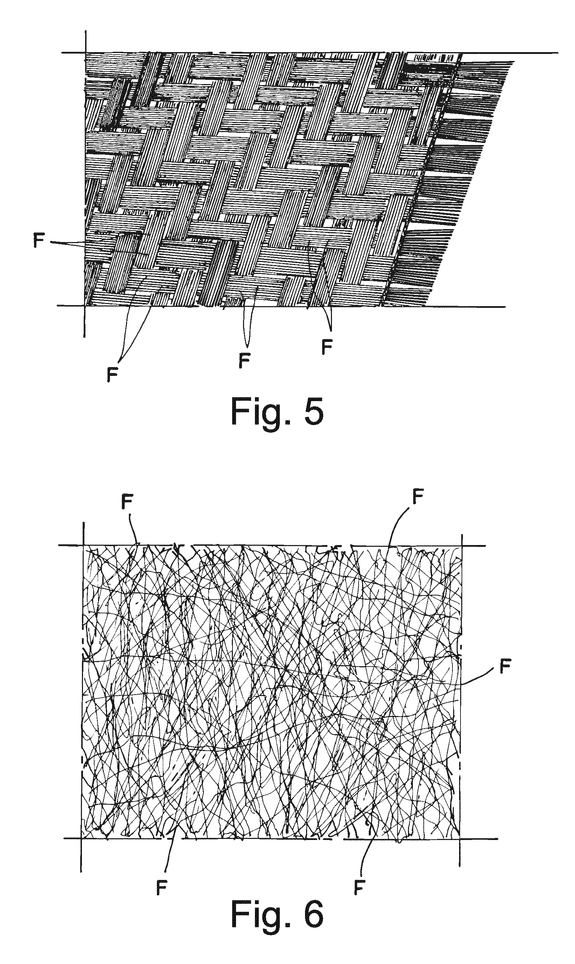

The arrangement of the layers of formation 2a, understood as the layered sequence of the different materials used, can vary according to requirements and is selected as a function of the type of dental prostheses P (figure 3) that it is wished to make. Advantageously, the layers of formation 2a of the body 2 of the dental wafer 1 provided with graphene, carbon or glass fibres can have fibres F oriented unidirectionally (figure 4), bidirectionally (figure 5), for example transversely or orthogonally, or multidirectionally (figure 6).

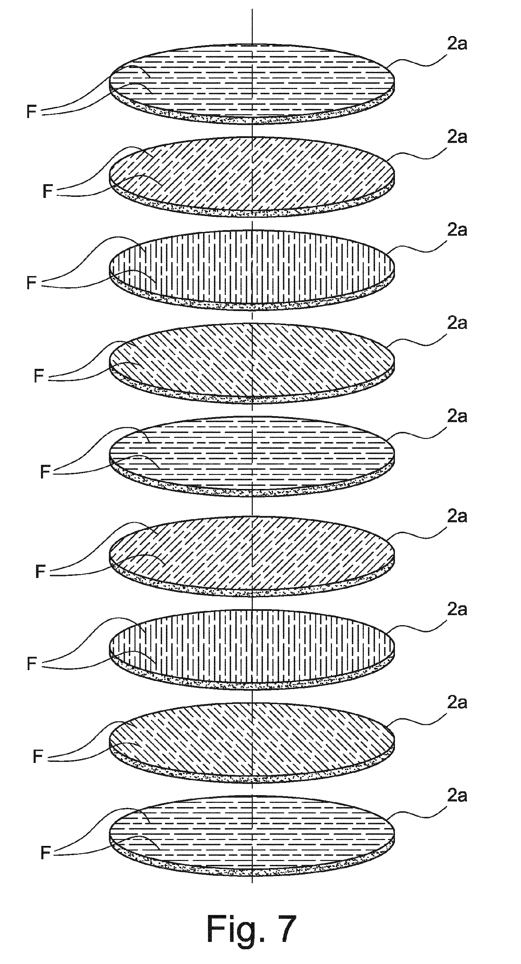

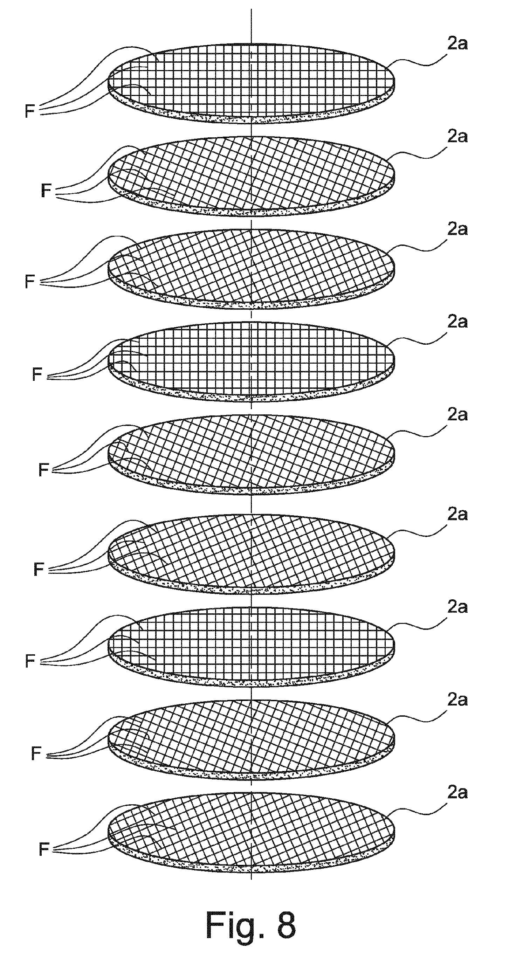

According to an advantageous aspect of the present invention, schematically represented in figures 7 and 8, the layers of formation 2a of the body 2 of the dental wafer 1 are arranged in such a way that the graphene and/or carbon and/or glass fibres F of at least one of the layers of formation 2a are oriented transversely with respect to the fibres of another layer of formation 2a overlapping it, in such a way that the overall structure consists of a multitude of fibres F, on several overlapped layers of formation 2a, which cross each other and intersect to define a sort of resistant mesh.

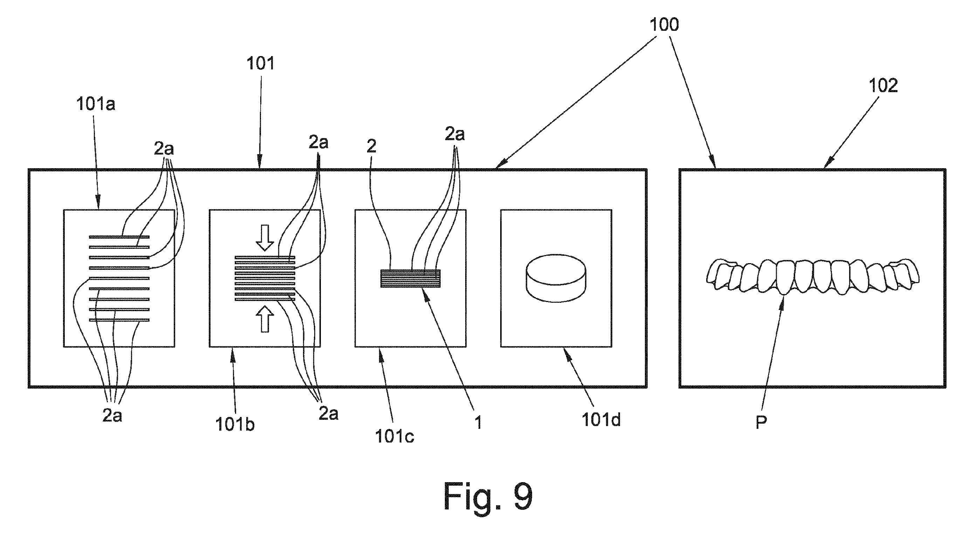

The present invention also provides a process 100, schematically represented in blocks in figure 9, for the formation of dental prostheses P (figure 3) and/or of analogous dental structures, such as bridges and/or similar.

In particular, as can be seen in the block diagram of figure 9, the process 100 comprises the preliminary step of making 101 at least one dental wafer 1 (figures 1 and 2) or a similar structure for dental works, such as the formation of dental prostheses P and/or bridges and/or similar.

Preferably, the dental wafer 1 obtained through the step of making 101 of the process 100 is intended for CNC CAD-CAM numerical control centres and/or machines through which it is possible to carry out the formation of the dental prostheses P by removal of material based on three-dimensional reference models.

In detail, the step of making 101 the dental wafer 1 is preferably carried out by firstly carrying out a step of overlapping 101a at least two layers of formation 2a, preferably a plurality of layers of formation 2a, pre-imbued or to be imbued with at least one thermosetting resin, such as an epoxy, acrylic, vinyl ester or polyester resin, or a thermoplastic resin, like for example polyamide and peek, in which at least one of the layers of formation 2a, preferably two or more, comprises graphene and/or carbon fibre and/or glass fibre in the most appropriate forms.

Once the step of overlapping 101a the layers of formation 2a has ended, a step of compressing 101b one layer of formation 2a against the other 2a is carried out to join these latter and break any micro air bubbles present therein or in the resins used to imbue them.

At the end of the compression step 101b a step of heating 101c the layers of formation 2a is carried out so that these latter harden forming a respective dental wafer 1 provided with graphene.

Subsequently to the step of making 101 the dental wafer 1, the process 100 comprises a step of removing 102 a predefined quantity of material. The removing step is preferably carried out starting from the dental wafer 1 based on a suitable three-dimensional reference model stored on a suitable memory support to form, at least in part, the dental prosthesis P and/or the support structure to be made.

The step of overlapping 101a the layers of formation 2a is carried out through the use of sheets of graphene and/or carbon and/or glass fibre F and provides, in detail, overlapping sheets the fibres F of which can be oriented unidirectionally or bidirectionally, preferably perpendicularly, or multidirectionally.

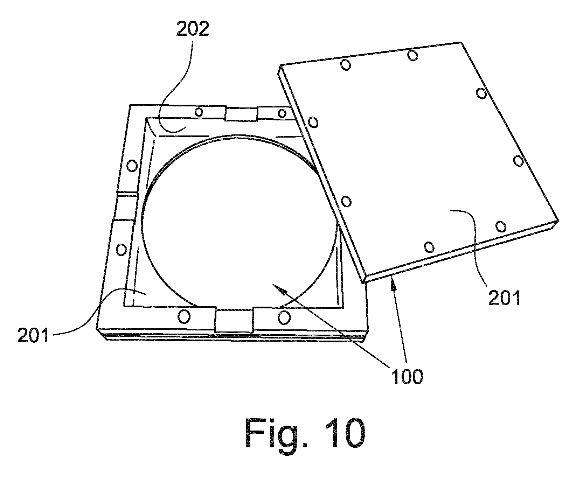

The step of overlapping 101a the aforementioned layers of formation 2a provides that each sheet be overlapped to at least one other sheet so that the respective fibres F are oriented transversely with respect to the fibres F of this latter. In other words, the step of overlapping 101a the aforementioned layers of formation 2a is carried out by firstly arranging a first sheet of fibres F so that these latter are oriented according to a respective reference direction, overlapping a second sheet with the respective fibres oriented transversely with respect to the fibres F of the first sheet, and subsequently each sheet so that the fibres F of this latter are oriented transversely with respect to the fibres F of the sheet overlapped previously. Preferably, at least the steps of overlapping 101a and compressing 101b the layers of formation 2a can be carried out in a mould 200 (figure 10) provided with two shells 201 that define a housing space 202 adapted to receive the aforementioned layers of formation 2a. Alternatively, the steps of overlapping 101a and compressing 101b the layers of formation 2a can also be carried out through the help of a vacuum bag in autoclave.

The heating step 101c can also be carried out in the mould 200 or in a suitable oven, once the compressed layers have been extracted from the mould 200 or from the vacuum bag in autoclave.

Subsequently to the step of heating 101c and to the consequent hardening of the compressed layers of formation 2a, the process 100 also comprises a finishing step 101d (figure 9), preferably by removal of material, which defines the definitive shape of the dental wafer 1 to be subjected to the step of removal 102 for the formation of said dental prosthesis P.

The present invention also comprises a process for making dental wafers 1 and/or similar structures that comprises the steps of overlapping 101a, compressing 101b, heating 101c and finishing 101d of the process 100 for the formation of dental prostheses P schematically illustrated in figure 9.

The invention solves the problems encountered in the prior art and achieves important advantages.

The dental wafers according to the present invention obtained through the process described above allow dental prostheses to be made having high mechanical strength, hardness, solidity and lightness.

## Claims

1. Process (100) for the formation of dental prostheses (P) and/or support structures for dental prostheses, such as bridges and/or the like, comprising the following steps:
making (101) at least one dental wafer (1) or a similar structure for dental works, such as the formation of dental prostheses (P) and/or of support structures for dental prostheses, in particular for CNC numerical control centres and/or machines responsible for the formation of dental prostheses (P) by removal of material;
removing (102) a predefined quantity of material, preferably according to a three-dimensional reference model, from said dental wafer (1) to form, at least in part, said dental prosthesis (1) and/or said support structure;
said process (100) being **characterised in that** the step (101) of making said at least one dental wafer (1) comprises the steps of:
overlapping (101a) at least two layers of formation (2a), preferably a plurality of layers of formation (2a), pre-imbued or to be imbued with at least one thermosetting resin or one thermoplastic resin, wherein at least one of said layers of formation (2a) comprises graphene and/or carbon fibre and/or glass fibre;
compressing (101b) a layer of formation (2a) against the other to join these latter and break any micro air bubbles present therein;
heating (101c) said layers of formation (2a) to harden these latter and form said dental wafer (1) provided with graphene.

2. Process for making dental wafers (1) and/or similar structures, in particular for dental works, such as the formation of dental prostheses (P) and/or of support structures for dental prostheses, said process comprising the steps of:
overlapping (101a) at least two layers of formation (2a), preferably a plurality of layers of formation (2a), pre-imbued or to be imbued with at least one thermosetting resin or one thermoplastic resin, wherein at least one of said layers of formation (2a) comprises graphene and/or carbon fibre and/or glass fibre;
compressing (101b) a layer of formation (2a) against the other to join these latter and break any micro air bubbles present therein;
heating (101c) said layers of formation (2a) to harden these latter and form said dental wafer (1) provided with graphene.

3. Process according to claim 1 or 2, wherein said graphene is present in said dental wafer (1) in the form of sheets and/or in the form of fibres (F) and/or in the form of particles dispersed in a resin, preferably a thermosetting or thermoplastic resin.

4. Process (100) according to any claims 1 to 3, wherein said carbon fibre (F) is present in said dental wafer (1) in the form of sheets and/or in a resin, preferably a thermosetting or thermoplastic resin, and/or in the form of fibre particles (F) dispersed in a resin, preferably a thermosetting or thermoplastic resin.

5. Process (100) according to any claims 1 to 4, wherein said glass fibre (F) is present in said dental wafer (1) in the form of sheets and/or in a resin, preferably a thermosetting or thermoplastic resin, and/or in the form of glass fibre particles (F) dispersed in a resin, preferably a thermosetting or thermoplastic resin.

6. Process (100) according to any claims 3 to 5, wherein each sheet of graphene and/or carbon and/or glass fibre (F) is provided with fibres (F) oriented unidirectionally or perpendicularly or multidirectionally, said sheets being overlapped on each other or on said layers of formation (2a) in resin and being arranged in such a way that the respective fibres (F) are oriented transversely with respect to the fibres (F) of the other sheets.

7. Process (100) according to any claims 3 to 6, wherein the overlapping of said layers of formation (2a) is carried out in a mould (200) or in a vacuum bag in autoclave, said process (100) also comprising a finishing step (101d), by removal of material, subsequent to the heating step (101c).

8. Dental wafer (1) and/or similar structure for the formation of dental prostheses (P), in particular on material removal CNC centres and/or machines, comprising a body (2) provided with at least two layers of formation (2a), in particular a plurality of layers of formation (2a), **characterised in that** at least one of said layers of formation (2a) comprises graphene and/or carbon fibre and/or glass fibre.

9. Dental wafer (1) according to claim 8, wherein at least one of said layers of formation (2a) of said body (2) of said dental wafer (1) comprises graphene fibre (F) in the form of a sheet and/or in the form of particles dispersed in a resin, preferably a thermosetting or thermoplastic resin.

10. Dental wafer (1) according to claim 8 or 9, wherein at least one of said layers of formation (2a) of said body (2) of said dental wafer (1) comprises carbon fibre in the form of sheets and/or in a resin, preferably a thermosetting or thermoplastic resin, and/or in the form of fibre particles (F) dispersed in a resin, preferably a thermosetting or thermoplastic resin.

11. Dental wafer (1) according to any claims 8 to 10, wherein at least one of said layers of formation (2a) of said body (2) of said dental wafer (1) comprises glass fibre (F) in the form of sheets and/or in a resin, preferably a thermosetting or thermoplastic resin, and/or in the form of glass fibre particles (F) dispersed in a resin, preferably a thermosetting or thermoplastic resin.

12. Dental wafer (1) according to any claims 9 to 11, wherein said graphene and/or carbon and/or glass fibres (F) of at least one of said layers of formation (2a) of said body (2) of said dental wafer (1) are oriented transversely with respect to the fibres (F) of another layer of formation (2a) overlapped thereon.

13. Dental wafer (1) and/or similar structure for the formation of dental prostheses (P), in particular on material removal CNC centres and/or machines, **characterised in that** it is made according to any claims 1 to 7.
